# EUROPÄISCHE PATENTSCHRIFT

(11) **EP 1 262 371 B1**
(45) Veröffentlichungstag und Bekanntmachung des Hinweises auf die Patenterteilung: **21.12.2005**
(21) Anmeldenummer: 02010690.2
(22) Anmeldetag: 14.05.2002
(51) Int. Cl.: B60R 13/00, G09F 21/04

(54) **Dachwerbeträger für Fahrzeug**
Publicity carrier for vehicle roof
Support de publicité pour toit de véhicule

(30) Priorität: 21.05.2001 DE 20108575 U
(43) Veröffentlichungstag der Anmeldung: 04.12.2002
(73) Patentinhaber: Lutter, Michael, 20146 Hamburg (DE); Röbbelen, Falk, 22525 Hamburg (DE); Johansson, Ralf Anton, 77654 Offenburg (DE)
(72) Erfinder: Möhler, Johannes Christoph, 69469 Weinheim (DE)
(74) Vertreter: Reiser, Tonio Andreas

(56) Entgegenhaltungen:
- DE-A- 2 312 918
- DE-A- 4 138 229
- FR-A- 2 207 821
- FR-A- 2 347 232
- US-A- 4 052 806
- US-A- 4 259 660
- US-A- 4 662 095

## Beschreibung

Die vorliegende Erfindung betrifft einen Dachwerbeträger für ein Fahrzeug gemäß dem Oberbegriff von Anspruch 1.

Aus der DE 41 38 229 A1 ist ein als Kraftfahrzeugaufbau ausgebildeter Werbeträger-Aufsteller bekannt. Er weist einen Fußteil und einen Halter zur Aufnahme eines blattförmigen Werbemediums auf. Dabei ist auf dem Halter eine angepasste durchsichtige Haube aufsetzbar, wobei zwischen dem Halter und der Haube der Werbeträger ohne weitere Befestigung einklemmbar ist.

Generell besteht bei Dachwerbeträgern mit im Wesentlichen parallel zur Fahrzeuglängsachse angeordneten Werbeflächen das Problem, dass bei der maschinellen Fahrzeugwäsche in einer Waschstrasse oder einem Waschportal die Sensoren zur Höhensteuerung der Waschwalzen den Dachwerbeträger nicht korrekt erfassen. Hierdurch kommt es zu einer falschen Höheneinstellung der Waschwalzen und unter Umständen zu Schäden am Dachwerbeträger oder dem Fahrzeug.

Zur Lösung dieses Problems schlägt die DE 299 08 570 U1 vor, den Werbeträger derart schwenkbar auszubilden, dass dieser zwischen einer Position in Fahrzeuglängsrichtung und einer Position in Fahrzeugquerrichtung um die Fahrzeughochachse drehbar ist und in diesen beiden Positionen am Grundgestell fixiert werden kann. Diese Gestaltung macht es erforderlich, den Dachwerbeträger an die jeweiligen Fahrzeugtypen anzupassen, da diese jeweils stark unterschiedliche Dachkrümmungen aufweisen und nicht nur aus optischen, sondern auch aus aerodynamischen Gründen ein großer Spalt zwischen dem Dachwerbeträger und dem Dach vermieden werden soll. Dies ist auch der Grund, weshalb sich derartige bekannte Dachwerbeträger nicht für Fahrzeuge mit einer stark ausgeprägten Dachwölbung eignen, wie sie in letzter Zeit bei Neufahrzeugen immer häufiger anzutreffen ist.

Die US 4,662,095 und US 4,259,660 beschreiben jeweils Schilder für ein Fahrzeugdach, die quer zur Längsrichtung des Fahrzeugs ausgerichtet sind und relativ zu diesem geschwenkt werden können.

Eine Vorrichtung zum Befestigen einer Werbung an einem Fahrzeugdach ist zudem aus der FR 2 207 821 bekannt. Die Vorrichtung weist gebogene Elemente auf, welche eine Aufnahme für die Werbung bilden. Die gebogenen Elemente können dabei aus einer ersten Position in eine etwas flachere Position bewegt werden, in der die gebogenen Elemente gleichwohl nach oben vorragen.

In der FR 2 347 232 ist ein Dachwerbeträger gemäß dem Oberbegriff von Anspruch 1 beschrieben. Der vorbekannte Dachwerbeträger für ein Fahrzeug weist eine auf zwei Querträgern befestigte Werbefläche auf. Die Werbefläche kann relativ zum Fahrzeug aus einer aufrechten Anzeigeposition in eine Ruheposition geschwenkt werden, in der der Dachwerbeträger eine geringere Höhe aufweist. In Fahrtrichtung vor der Werbefläche ist ein Taxischild starr befestigt.

Aufgabe der vorliegenden Erfindung ist es, einen Dachwerbeträger anzugeben, der auf einfache Weise zwischen der Anzeigeposition und der Ruheposition bewegt und verriegelt werden kann.

Diese Aufgabe wird bei einem Dachwerbeträger mit den Merkmalen von Anspruch 1 gelöst.

Durch eine derartige Verstellung des Dachwerbeträgers, welche z.B. dadurch erfolgen kann, dass dieser klappbar an dem Grundgestell vorgesehen ist, ist es möglich, einerseits eine große, als Blickfang dienende Werbefläche auf dem Dach eines Fahrzeugs zu realisieren. Andererseits kann durch Bewegung des Werbeträgers in seine Ruheposition die Höhe des Dachwerbeträgers derart verringert werden, dass das Fahrzeug mit dem Dachwerbeträger problemlos maschinell in einer Waschstrasse oder in einem Waschportal gereinigt werden kann. Insbesondere ist ein solcher Dachwerbeträger für Taxis geeignet, welche häufig, unter Umständen mehrmals pro Woche maschinell gereinigt werden. Zudem ist der Einsatz des Dachwerbeträgers auf Taxis besonders interessant, da diese häufig an stark frequentierten Plätzen und an vielen attraktiven, innerstädtischen Standorten mit hohem Publikumsverkehr im Einsatz sind.

Gemäß der Erfindung weist der Dachträger wenigstens ein weiteres Anzeigeelement auf, welches insbesondere als Taxischild ausgebildet ist. Auf diese Weise kann der Dachwerbeträger eine weitere Funktion übernehmen und macht ein separat auf dem Fahrzeugdach angeordnetes Taxischild überflüssig. Um den jeweiligen gesetzlichen Vorschriften zu genügen, können dabei z.B. zwei, insbesondere als Taxischilder ausgebildete Anzeigeelemente vorgesehen sein, welche benachbart zum Werbeträger angeordnet sind, und von denen eines in Fahrtrichtung vor und eines in Fahrtrichtung hinter dem Werbeträger angeordnet ist. Durch eine derartige Anordnung wird erreicht, dass die Taxischilder von unterschiedlichen Seiten eingesehen werden können, ohne dass der Werbeträger den Blick hierauf verstellt.

Die Erfindung sieht vor, dass das Anzeigeelement relativ zu dem Grundgestell aus einer Verriegelungsstellung, in der der Werbeträger in seiner Anzeigeposition oder der Ruheposition oder gegebenenfalls einer Serviceposition fixiert ist, in eine Freigabestellung bewegbar ist, in der der Werbeträger zwischen der Anzeigeposition und der Ruheposition und gegebenenfalls der Serviceposition bewegbar ist. Hierdurch wird nicht nur eine leichte Bedienbarkeit des erfindungsgemäßen Dachwerbeträgers, sondern auch eine kompakte Anordnung erreicht.

Gemäß einer vorteilhaften Weiterbildung der Erfindung ist vorgesehen, dass die Werbefläche in der Anzeigeposition im Wesentlichen aufrecht, insbesondere im Wesentlichen senkrecht ausgerichtet ist, und in der Ruheposition im Wesentlichen parallel zum Fahrzeugdach ausgerichtet ist. Eine derart aufrecht auf dem Fahrzeugdach angeordnete Werbefläche garantiert eine gute Erkennbarkeit des Werbemediums und sorgt dafür, dass dieses blickfangmäßig herausgestellt werden kann.

Vorteilhafterweise ist weiterhin vorgesehen, dass die insbesondere längliche Werbefläche in der Anzeigeposition und der Ruheposition im Wesentlichen parallel zur Fahrzeuglängsachse angeordnet ist. Dies kann z.B. dadurch erreicht werden, dass der Werbeträger um eine parallel zur Fahrzeuglängsachse in der unteren Hälfte des Werbeträgers angeordnete Drehachse klappbar bzw. schwenkbar ist.

Unerwünschte Bewegungen des Werbeträgers werden dadurch verhindert, dass dieser in der Anzeigeposition und/oder der Ruheposition durch Verriegelungsmittel fixierbar ist. Dabei können die Verriegelungsmittel gleichzeitig für eine Zentrierung des Werbeträgers eingesetzt werden, damit dieser z.B. in der Anzeigeposition exakt und möglichst spielfrei gehalten wird. Auf diese Weise können unerwünschte Bewegungen des Werbeträgers und auch Klappergeräusche auf einfache und kostengünstige Weise vermieden werden.

Die Handhabung des erfindungsgemäßen Dachwerbeträgers wird dadurch erleichtert, dass der Werbeträger durch die Verriegelungsmittel in einer zwischen Ruheposition und Anzeigeposition liegenden Serviceposition gehalten werden kann. Dies ist insbesondere dann von Vorteil, wenn die Werbefläche für in regelmäßigen Abständen, beispielsweise eine Woche oder eine Dekade, wechselnde Werbekampagnen eingesetzt werden soll und ein entsprechend häufiger Austausch des Werbemediums erforderlich ist. In der Serviceposition wird die Werbefläche in einem Winkel kleiner 90° und größer 0°, insbesondere zwischen 20° bis 60° zum Fahrzeugdach gehalten. In dieser Position rückt das obere Ende eines längs auf dem Fahrzeugdach angeordneten Werbeträgers zur Fahrzeugseite hin. Entsprechend wird die Bedienung des Werbeträgers, ausgehend von der Fahrzeugseite, erleichtert, insbesondere dann, wenn es sich um eine relativ große Werbefläche handelt.

Eine weitere Verbesserung wird dadurch erreicht, dass an dem Werbeträger eine Aufnahme für das Werbemedium, insbesondere ein Werbeplakat, vorgesehen ist, mittels derer das Werbemedium auswechselbar festgelegt werden kann.

Gemäß einer Fortbildung dieses Erfindungsgedankens ist vorgesehen, dass die Aufnahme für das Werbemedium durch eine durchsichtige Haube abgedeckt ist, welche abnehmbar über der Werbefläche angeordnet ist. Eine solche Haube sorgt nicht nur für eine gute Fixierung von z.B. blattförmigen Werbemedien, sondern auch für einen Schutz vor Witterungseinflüssen. Entsprechend können als Werbemedien auch kostengünstig herstellbare Werbeplakate aus bedrucktem Papier oder dergleichen verwendet werden.

Gemäß einer vorteilhaften Weiterbildung dieses Erfindungsgedankens ist vorgesehen, dass an dem Anzeigeelement Vorsprünge und/oder Ausnehmungen vorgesehen sind, welche mit korrespondierenden Ausnehmungen und/oder Vorsprüngen des Werbeträgers oder eines hiermit verbundenen Verriegelungselements in Eingriff bringbar sind. Auf diese Weise kann einfach und kostengünstig eine Verriegelung der Werbefläche erreicht werden, wobei Vorsprünge und Ausnehmungen verdeckt angeordnet werden können. Auf diese Weise sind die Verriegelungsmittel nicht nur leicht bedienbar, sondern können auch derart verdeckt angeordnet werden, dass sie den ästhetischen Gesamteindruck des Dachwerbeträgers nicht stören.

Gemäß einer weiteren Ausgestaltung ist vorgesehen, dass insbesondere keil- oder konusförmige Klemmmittel vorgesehen sind, durch die der Werbeträger in seiner Anzeigeposition und/oder der Ruheposition und/oder der Serviceposition fixierbar ist.

Eine besonders stabile Konstruktion des Dachwerbeträgers wird dadurch erreicht, dass das Grundgestell wenigstens einen quer zur Fahrzeuglängsachse verlaufenden Querträger und wenigstens einen im Wesentlichen parallel zur Fahrzeuglängsachse verlaufenden Längsträger aufweist. Dabei hat sich bewährt, wenn das Grundgestell zwei im Abstand zueinander angeordnete Querträger sowie einen insbesondere mittig angeordneten Längsträger aufweist.

Indem der Werbeträger derart relativ zu dem Grundgestell verstellbar ist, dass er in seiner Verriegelungsposition formschlüssig mit dem Längsträger und/oder dem Querträger verbunden ist, wird eine besonders kompakte und stabile Konstruktion erreicht. Zudem ermöglicht es diese Gestaltung den Längsträger verdeckt unter den Werbeträger anzuordnen.

Das passgenaue Einsetzen der Werbemedien wird dadurch erleichtert, dass an dem Werbeträger insbesondere als Vorsprünge ausgebildete Positionierungsmittel für das Werbemedium vorgesehen sind.

Die Sichtbarkeit des Werbemediums, insbesondere bei Dunkelheit, kann dadurch verbessert werden, dass der Werbeträger Beleuchtungsmittel zur Hintergrundbeleuchtung des Werbemediums aufweist.

Eine gleichmäßige Beleuchtung des Werbemediums kann insbesondere dadurch erreicht werden, dass zur Hintergrundbeleuchtung des Werbemediums ein insbesondere als Streuscheibe ausgebildetes durchscheinendes Element zwischen Beleuchtungsmittel und Werbemedium vorgesehen ist.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Beziehung.

Es zeigen:
Figur 1: Einen erfindungsgemäßen Werbeträger in seiner aufrechten Anzeigeposition.
Figur 2: Den Werbeträger aus Figur 1 in seiner Ruheposition.
Figur 3: Den erfindungsgemäßen Werbeträger aus Figur 1 und Figur 2 in seiner Serviceposition.
Figur 4: Einen Ausschnitt des in den Figuren 1 bis 3 dargestellten Werbeträgers.
Figur 5: Eine weitere Ausführungsform eines erfindungsgemäßen Werbeträgers in seiner Serviceposition.
Figuren 6a und 6b: Der Werbeträger aus Figur 5 in seiner aufrechten Position.
Figuren 7a und 7b: Schematische Querschnitte durch den in den Figuren 5 und 6 dargestellten Werbeträger.
Figur 8: Einen Teil einer noch weiteren Ausführungsform eines erfindungsgemäßen Werbeträgers.

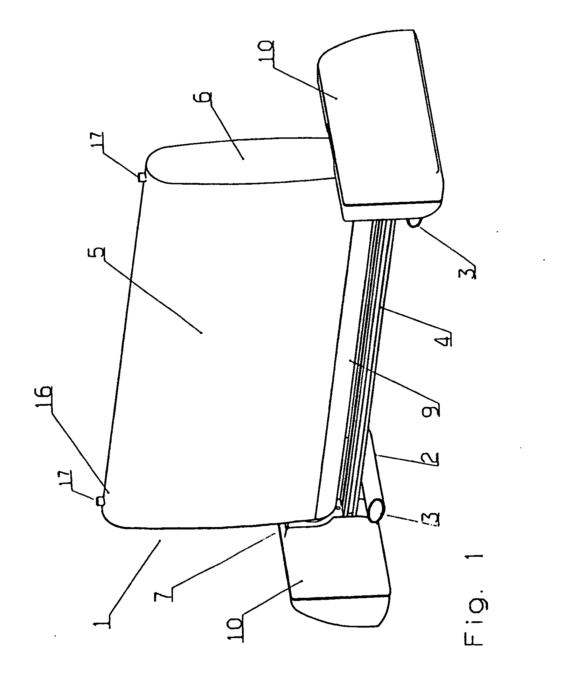

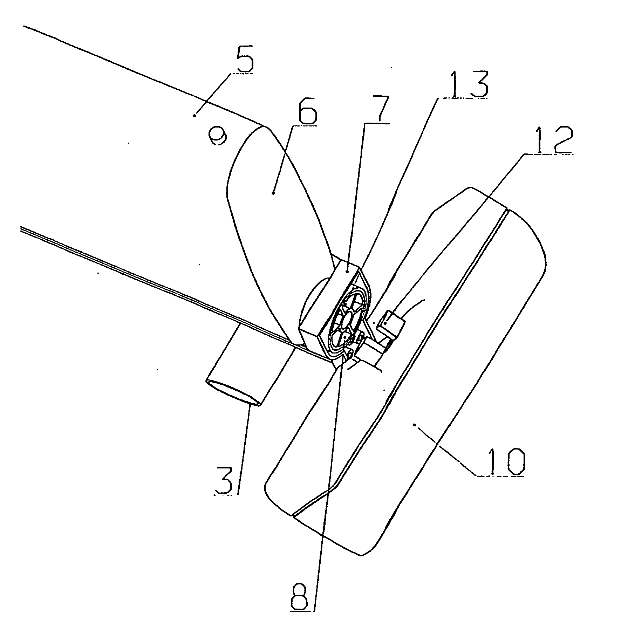

In den Figuren 1 bis 4 ist eine erste Ausführungsform eines erfindungsgemäßen Dachwerbeträgers 1 dargestellt. Dieser weist ein Grundgestell 2 zur Festlegung an einem Dach eines Fahrzeuges auf. Das Grundgestell 2 weist zwei Querträger 3 auf, von welchem einer in Fahrtrichtung vorne und einer in Fahrtrichtung hinten angeordnet ist. Diese Querträger 3 sind in den Figuren nur teilweise dargestellt, da hierfür bekannte Dachträger verwendet werden können, welche über Befestigungsfüße am Dach eines Kraftfahrzeugs oder - beispielsweise im Falle eines Kombis - an einer daran festgelegten Dachreling festgelegt werden können. An den Querträgern 3, von denen jeweils nur die mittleren Bereiche dargestellt sind, ist ein im Wesentlichen parallel zur Fahrzeuglängsachse verlaufender Längsträger 4 angeordnet, welcher auf den Querträgern festgelegt ist. Längsträger 4 und Querträger 3 sind dabei, zur Erzielung einer hohen Stabilität, aus Metall, beispielsweise aus Aluminiumprofilen gefertigt.

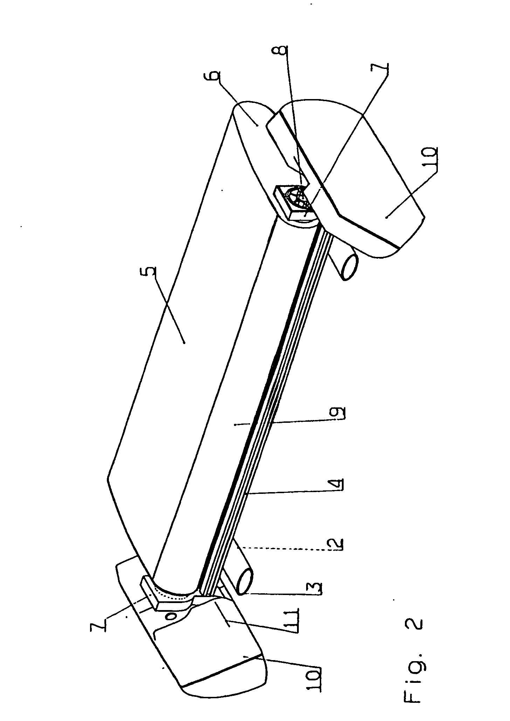

Der erfindungsgemäße Dachwerbeträger 1 weist darüber hinaus wenigstens einen eine Werbefläche 5 für ein Werbemedium aufweisenden Werbeträger 6 auf. In Figur 1 weist der Werbeträger 6 zwei Werbeflächen 5 auf - eine in Richtung der Fahrzeuglängsachse links, die andere rechts - und ist in seiner aufrechten Anzeigeposition dargestellt, in der der Dachwerbeträger 1 eine erste Höhe aufweist. Der Werbeträger 6 ist aus der in Figur 1 dargestellten Anzeigeposition in die in Figur 2 dargestellte Ruheposition bewegbar, in der der Dachwerbeträger 1 eine zweite Höhe, die geringer als die erste Höhe ist, aufweist. Dabei sind die an gegenüberliegenden Seitenflächen des Werbeträgers 6 angeordneten Werbeflächen 5 länglich, insbesondere im Wesentlichen rechteckig ausgebildet und sind in der Anzeigeposition und in der Ruheposition im Wesentlichen parallel zur Fahrzeuglängsachse angeordnet. In der Anzeigeposition ist die Werbefläche 5 im Wesentlichen aufrecht, insbesondere im Wesentlichen senkrecht ausgerichtet, wie dies in Figur 1 dargestellt ist. Hingegen ist die Werbefläche in der Ruheposition im Wesentlichen parallel zum Fahrzeugdach ausgerichtet. Hierdurch bietet der erfindungsgemäße Dachwerbeträger beim maschinellen Reinigen in einer Waschstrasse oder einem Waschportal den Waschbürsten eine große Auflagefläche und vermeidet auf diese Weise sicher eine Fehlfunktion der Anlage. Aufgrund der geringen Höhe des Dachwerbeträgers wird zudem trotz des aufgesetzten Dachwerbeträgers eine weitgehende Reinigung des Fahrzeugdaches ermöglicht. Gleichzeitig wird in der Ruhestellung eine gute Reinigung der obenliegenden Werbefläche 5 erreicht. Indem der Werbeträger ausgehend von der mittigen Anzeigeposition in zwei Richtungen in eine in Fahrtrichtung linke und eine in Fahrtrichtung rechte Ruheposition umklappbar ist, können beide Werbeflächen 5 gereinigt werden.

Die Bewegung des Werbeträgers 6 erfolgt dabei als eine Klapp- oder Drehbewegung. Hierzu sind an den Längsträgern 4 des Grundgestells 2 zwei Lagerböcke mit jeweils einer Ausnehmung angeordnet, in der an dem Werbeträger 6 angeordnete Lagerzapfen 8 drehbar aufnehmbar sind. Dabei sind die Lagerzapfen 8 in einem unteren Abschnitt des Werbeträgers 6 angeordnet. Zudem ist der untere Abschnitt des Werbeträgers 6 mit einem abgerundeten Abschnitt 9 versehen, der es insbesondere ermöglicht, den Werbeträger 6 besonders dicht an dem Grundgestell 2 anzuordnen.

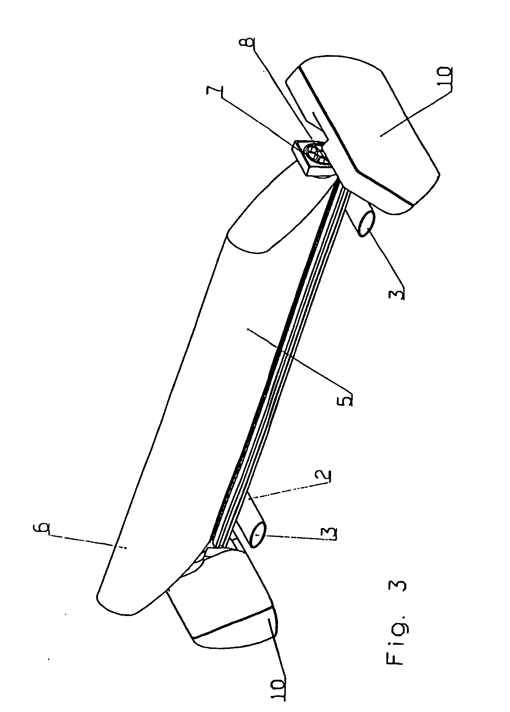

Weiterhin sind Verriegelungsmittel vorgesehen, durch welche der Werbeträger 6 in seiner Anzeigeposition fixiert werden kann. Dabei sind die Verriegelungsmittel insbesondere derart ausgebildet, dass sie gleichzeitig den Werbeträger 6 zentrieren und Spiel mit daraus resultierendem Klappern vermeiden. Durch diese Verriegelungsmittel, welche nachfolgend näher beschrieben werden, kann der Werbeträger 6 darüberhinaus auch in seiner Ruheposition fixiert werden, um unerwünschte Bewegungen zu vermeiden. Schließlich können die Verriegelungs- oder Haltemittel auch dazu dienen, den Werbeträger 6 in einer zwischen Ruheposition und Anzeigeposition liegenden Serviceposition zu halten. Eine solche Serviceposition, in der besonders einfach ein Wechsel des Werbemediums vorgenommen werden kann, ist in Figur 3 dargestellt. Hierbei wird die Werbefläche in einem Winkel kleiner 90° und größer 0° zur Ebene des Daches gehalten, wobei sich ein Wert zwischen 20° und 60° als vorteilhaft erwiesen hat.

Der erfindungsgemäße Dachwerbeträger 1 weist neben dem Werbeträger 6 wenigstens ein Anzeigeelement 10 auf. Bei den hier dargestellten Ausführungsbeispielen sind zwei Anzeigeelemente 10 vorgesehen, welche benachbart zum Werbeträger 6 angeordnet sind und von denen eines in Fahrtrichtung vor und eines in Fahrtrichtung hinter dem Werbeträger 6 angeordnet ist. Diese Anzeigeelemente 10 können dabei insbesondere als mit einem Schriftzug "TAXI" versehene Taxischilder dienen, welche sowohl von vorne als auch von hinten eingesehen werden können.

Die Anzeigeelemente 10 sind relativ zu dem Grundgestell 2 um eine angedeutet dargestellte Drehachse 11 derart bewegbar angeordnet, dass sie eine Verriegelungsstellung und eine Freigabestellung einnehmen können. In der Verriegelungsstellung, in der der Werbeträger in seiner Anzeigeposition, Ruheposition oder der Serviceposition fixiert ist, sind die Anzeigeelemente 10 nahe bei dem Werbeträger 6 angeordnet. Währenddessen sind die Anzeigeelemente 10 in der in den Figuren 2, 3 und 4 dargestellten Freigabestellung, in der der Werbeträger 6 zwischen der Anzeigeposition, der Ruheposition und ggf. der Serviceposition bewegbar ist, um die Drehachse. 11 abgeklappt und entfernt von dem Werbeträger 6 angeordnet. Dabei erfolgt eine Verriegelung des Werbeträgers 6 dadurch, dass an dem Anzeigeelement 10 ausgebildete Vorsprünge 12 mit korrespondierenden Ausnehmungen 13 des Werbeträgers 6 oder eines hiermit verbundenen Verriegelungselements in Eingriff bringbar sind. Bei den in den Figuren dargestellten Ausführungsformen sind die Ausnehmungen 13 in dem Lagerzapfen 8 vorgesehen, welcher drehfest mit dem Werbeträger 6 verbunden ist und somit zusammen mit den Vorsprüngen 12 als Verriegelungselement wirkt.

Um ein unbeabsichtigtes Entriegeln des Werbeträgers 6 zu vermeiden, können nicht dargestellte Sicherungsmittel, z.B. Rastnasen vorgesehen werden, welche die Anzeigeelemente 10 in ihrer Verriegelungsstellung sichern.

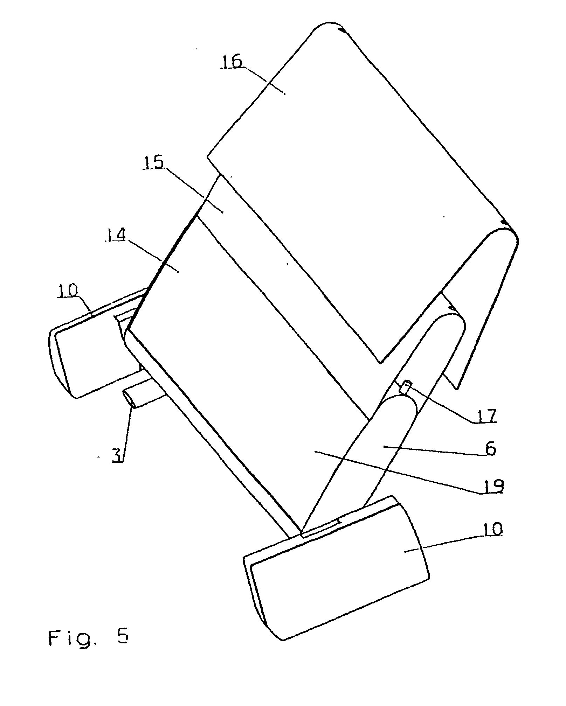

Der erfindungsgemäße Werbeträger 6 weist eine Aufnahme 14 für das Werbemedium 15 auf, mittels derer das insbesondere blattförmige Werbemedium 15 auswechselbar an der Werbefläche 5 festgelegt werden kann. Dies ist besonders gut aus der Explosionsdarstellung in Figur 5 zu erkennen. Selbstverständlich wäre es auch möglich das Werbemedium 15 in einer anderen geeigneten Weise, beispielsweise durch Kleben an der Werbefläche 5 zu fixieren. Die auswechselbare Anordnung des Werbemediums 15 in der Aufnahme 14 ist jedoch dann besonders vorteilhaft, wenn das Werbemedium häufig ausgewechselt werden soll. Dabei kann die Aufnahme 14 durch eine durchsichtige Haube 16 abgedeckt sein, welche abnehmbar über der Werbefläche angeordnet ist und das Werbemedium 15 festklemmt. Hierdurch wird das darunterliegende Werbemedium gegen Witterungseinflüsse geschützt, so dass auch kostengünstig herstellbar Werbemedien, wie Werbeplakate aus Papier, verwendet werden können. Dabei wird das Auswechseln des Werbemediums 15 dadurch erleichtert, dass an dem Werbeträger 6 Positionierungsmittel 17 für das Werbemedium 15 vorgesehen sind. Vorliegend sind diese als zwei Vorsprünge ausgebildet, welche an der Oberseite des Werbeträgers ausgebildet sind. Dabei wird erfindungsgemäß insbesondere ein Werbemedium 15 eingesetzt, welches die in Fahrtrichtung links und Fahrtrichtung rechts liegende Werbeflächen übergreift.

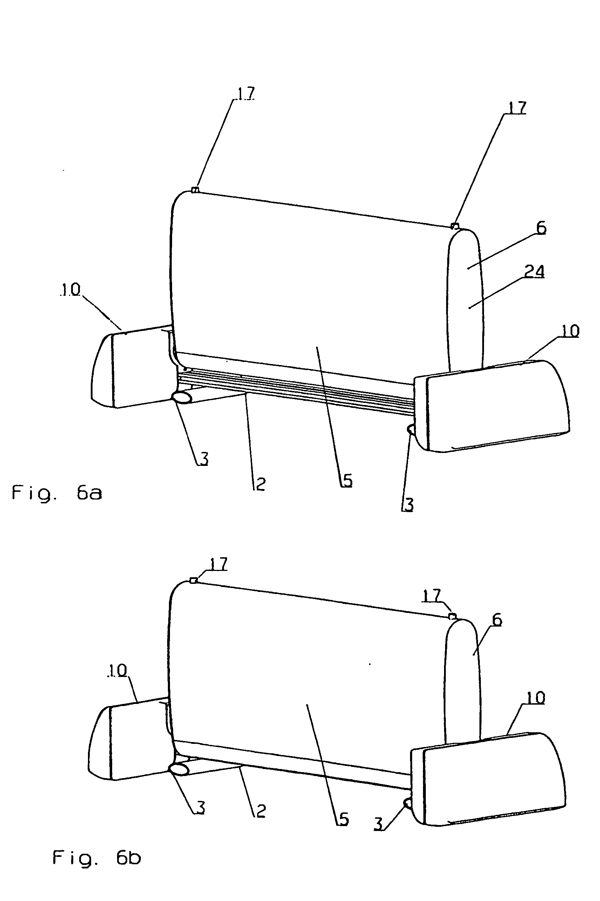

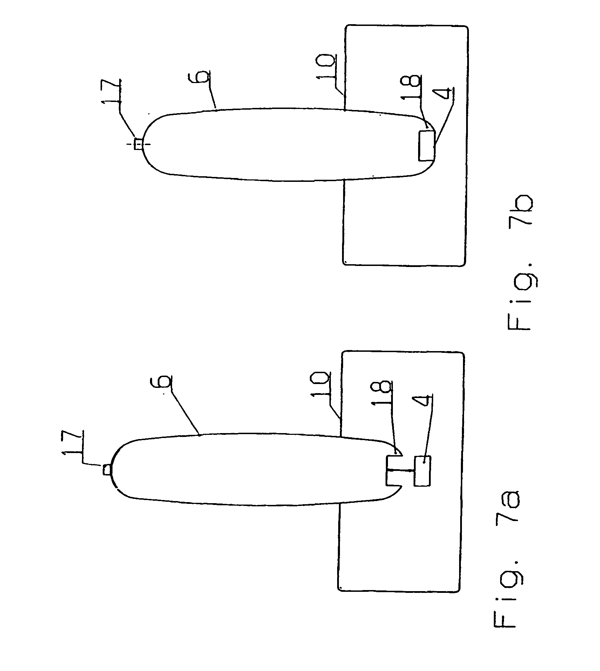

Bei der in den Figuren 5 bis 7 dargestellten Ausführungsform der Erfindung ist der Werbeträger 6 derart relativ zu dem Grundgestell 2 verstellbar, dass er in seiner Verriegelungsposition formschlüssig mit dem Längsträger und/oder dem Querträger verbunden ist. Diese Konstruktion ist insbesondere aus den Figuren 6 und 7 erkennbar. In der Verriegelungsposition ist der Werbeträger 6 nach unten bewegt und umgreift mit den Wangen 18 den Längsträger 4, welcher in einer durch die Wangen 18 begrenzten Nut an der Unterseite des Werbeträgers 6 aufgenommen ist. Dies ist in den Figuren 6b und 7b dargestellt. Bevor der Werbeträger 6 aus der dargestellten Anzeigeposition in die Ruheposition oder Serviceposition geklappt werden kann, wird dieser in Richtung des Pfeils nach oben bewegt, so dass die formflüssige Verbindung zwischen Längsträger 4 und Werbeträger 6 gelöst wird (vgl. Fig. 6a und 7a). In dieser Position kann der Werbeträger 6 in die Serviceposition oder Ruheposition überführt werden. Zusätzlich können zur Zentrierung des Werbeträgers 6 nicht dargestellte Zentrierungsmittel z.B. in Form von Keilen und/oder elastischen Klemmelementen in oder an der Nut angeordnet werden.

Weiterhin kann der Werbeträger 6 nicht dargestellte Beleuchtungsmittel zur Hintergrundbeleuchtung des Werbemediums 15 aufweisen. Hierzu ist ein insbesondere als Streuscheibe ausgebildetes durchscheinendes Element 19 vorgesehen, welches die Unterseite der Aufnahme 14 für das Werbemedium 15 bildet.

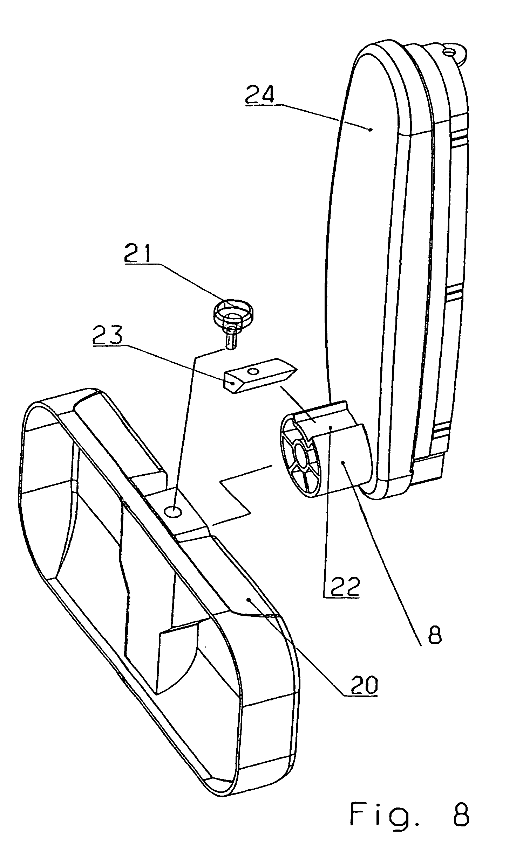

Die in Figur 8 als Explosionsdarstellung gezeigte Ausführungsform unterscheidet sich von den vorbeschriebenen Ausführungsformen durch eine andere Ausgestaltung der Verriegelungsmittel, welche den Werbeträger 6 in der Anzeigeposition und ggf. in der Ruheposition und/oder der Serviceposition fixieren. Bei dieser Variante ist der Lagerbock 7 für den Lagerzapfen 8 einstückig mit dem Gehäuse 20 des nur teilweise dargestellten Anzeigeelements 10 ausgebildet. Hierdurch wird nicht nur eine hohe Stabilität, sondern insbesondere eine kostengünstige Herstellung erreicht. Der Lagerbock 7 und das Anzeigeelement 10 sind im wesentlichen starr an dem Grundgestell 2 festgelegt.

Zur Fixierung des Werbeträgers 6 in einer seiner Positionen sind Klemmmittel vorgesehen. Diese wirken zwischen dem Lagerbock 7 bzw. dem Anzeigeelement 10 und dem Lagerzapfen 8, welcher an einem Stirnträger 24 des Werbeträgers 6 einstückig ausgebildet ist. Die Klemmmittel sind bei der dargestellten Ausführungsform als wenigstens ein in einer keilförmigen oder konischen Ausnehmung 22 des Lagerzapfens 8 angeordneter Keil 23 bzw. Konus ausgebildet, welcher durch ein insbesondere als Schraube 21 ausgebildetes Spannelement mit der insbesondere nutförmigen Ausnehmung 22 verspannt werden kann. Hierdurch wird nicht nur eine formschlüssige, sondern auch eine kraftschlüssige Verbindung zwischen Werbeträger 6 und Grundgestell 2 erreicht, was eine genaue Zentrierung des Werbeträgers 3 ermöglicht.

Weiterhin können zusätzlich zu den Klemmmitteln 21 nicht dargestellte Rastmittel vorgesehen werden. Diese können insbesondere als eine oder mehrere im Lagerbock 7 angeordnete Kugeln ausgebildet sein, welche unter Federspannung in Mulden oder Ausnehmungen eingreifen, die im bzw. am Lagerzapfen 8 vorgesehen sind. Durch diese Rastmittel wird die Lage der Anzeigeposition, der Ruheposition und/oder der Serviceposition angezeigt und dadurch die Bedienung erleichtert. Dabei sind die Rastmittel vorzugsweise derart ausgebildet, daß sie den Werbeträger 6 in der Serviceposition halten können, ohne daß hierfür die Klemmmittel 21 erforderlich wären. Vorteilhafterweise kann die Vorspannung der Federkraft, z.B. durch eine Stellschraube reguliert werden.

Im Übrigen stimmt die in den Figuren 5 bis 8 dargestellten Dachwerbeträger mit demjenigen überein, welcher in den Figuren 1 bis 4 dargestellt ist. Auf die diesbezügliche Beschreibung wird dabei Bezug genommen, wobei Teile gleicher Funktion mit den selben Bezugszeichen versehen sind.

### BEZUGSZEICHENLISTE

- 1: Dachwerbeträger
- 2: Grundgestell
- 3: Querträger
- 4: Längsträger
- 5: Werbefläche
- 6: Werbeträger
- 7: Lagerbock
- 8: Lagerzapfen
- 9: Abgerundeter Querschnitt
- 10: Anzeigeelement
- 11: Drehachse
- 12: Vorsprünge
- 13: Ausnehmungen
- 14: Aufnahme
- 15: Werbemedium
- 16: Haube
- 17: Positionierungsmittel
- 18: Wange
- 19: Durchscheinendes Element
- 20: Gehäuse
- 21: Schraube
- 22: Ausnehmung
- 23: Keil
- 24: Stirnträger

## Patentansprüche

1. Dachwerbeträger (1) mit einem Grundgestell (2) zur Festlegung an einem Dach eines Fahrzeuges, insb. eines Taxis, und mit einem wenigstens eine Werbefläche (5) für ein Werbemedium (15) aufweisenden Werbeträger (6), wobei der Werbeträger (6) aus einer aufrechten Anzeigeposition, in der der Dachwerbeträger (1) eine erste Höhe aufweist, in eine Ruheposition bewegbar ist, in der der Dachwerbeträger (1) eine zweite Höhe aufweist, die geringer als die erste Höhe ist, und wobei der Dachwerbeträger (1) wenigstens ein Anzeigeelement (10) aufweist, welches insbesondere als Taxischild ausgebildet ist, **dadurch gekennzeichnet, dass** das wenigstens eine Anzeigeelement (10) relativ zu dem Grundgestell (2) aus einer Verriegelungsstellung, in der der Werbeträger (6) in seiner Anzeigeposition oder der Ruheposition fixiert ist, in eine Freigabestellung bewegbar ist, in der der Werbeträger (6) zwischen der Anzeigeposition und der Ruheposition bewegbar ist.

2. Dachwerbeträger nach Anspruch 1, **dadurch gekennzeichnet, dass** die Werbefläche (5) in der Anzeigeposition im wesentlichen aufrecht, insb. im wesentlichen senkrecht ausgerichtet ist, und in der Ruheposition im wesentlichen parallel zum Fahrzeugdach ausgerichtet ist.

3. Dachwerbeträger nach Anspruch 1 oder 2, **dadurch gekennzeichnet, dass** die insbesondere längliche Werbefläche (5) in der Anzeigeposition und der Ruheposition im wesentlichen parallel zur Fahrzeugslängsachse angeordnet ist.

4. Dachwerbeträger nach einem der Ansprüche 1 bis 3, **dadurch gekennzeichnet, dass** der Werbeträger (6) in der Anzeigeposition und/oder der Ruheposition durch Verriegelungsmittel fixierbar ist.

5. Dachwerbeträger nach Anspruch 4, **dadurch gekennzeichnet, dass** der Werbeträger (6) durch die Verriegelungsmittel in einer zwischen der Ruheposition und der Anzeigeposition liegenden Serviceposition, in der die Werbefläche (5) in einem Winkel kleiner 90 Grad und größer 0 Grad, insb. zwischen 20 bis 60 Grad zum Fahrzeugdach gehalten werden kann.

6. Dachwerbeträger nach Anspruch 5, **dadurch gekennzeichnet, dass** der Werbeträger (6) in der Serviceposition durch das wenigstens eine Anzeigeelement in dessen Verriegelungsstellung fixiert ist.

7. Dachwerbeträger nach einem der Ansprüche 1 bis 6, **dadurch gekennzeichnet, dass** an dem Werbeträger (5) eine Aufnahme (14) für das Werbemedium (15), insb. ein Werbeplakat, vorgesehen ist, mittels derer das Werbemedium (15) auswechselbar festgelegt werden kann.

8. Dachwerbeträger nach Anspruch 7, **dadurch gekennzeichnet, dass** die Aufnahme (14) für das Werbemedium (15) durch eine durchsichtige Haube (16) abgedeckt ist, welche abnehmbar über der Werbefläche (5) angeordnet ist.

9. Dachwerbeträger nach einem der Ansprüche 1 bis 8, **dadurch gekennzeichnet, dass** zwei Anzeigeelemente (10) benachbart zum Werbeträger (6) angeordnet sind.

10. Dachwerbeträger nach einem der Ansprüche 1 bis 9, **dadurch gekennzeichnet, dass** an dem wenigstens einen Anzeigeelement (10) Vorsprünge (12) und/oder Ausnehmungen (13) vorgesehen sind, welche in der Verriegelungsposition mit korrespondierenden Ausnehmungen (13) und/oder Vorsprüngen (12) des Werbeträgers (6) oder eines hiermit verbundenen Verriegelungselements in Eingriff stehen.

11. Dachwerbeträger nach einem der Ansprüche 1 bis 10, **dadurch gekennzeichnet, dass** insbesondere keil- oder konusförmige Klemmmittel vorgesehen sind, durch die der Werbeträger (6) in seiner Anzeigeposition und/oder der Ruheposition und/oder der Serviceposition fixierbar ist.

12. Dachwerbeträger nach einem der Ansprüche 1 bis 11, **dadurch gekennzeichnet, dass** das Grundgestell (2) wenigstens einen quer zur Fahrzeuglängsachse verlaufenden Querträger (3) und wenigstens einen im wesentlichen parallel zur Fahrzeuglängsachse verlaufenden Längsträger (4) aufweist.

13. Dachwerbeträger nach einem der Ansprüche 1 bis 12, **dadurch gekennzeichnet, dass** an dem Werbeträger (6) insb. als Vorsprünge ausgebildete Positionierungsmittel (17) für das Werbemittel (15) vorgesehen sind.

14. Dachwerbeträger nach einem der Ansprüche 1 bis 13, **dadurch gekennzeichnet, dass** der Werbeträger (6) Beleuchtungsmittel zur Hintergrundbeleuchtung des Werbemediums (15) aufweist.

15. Dachwerbeträger nach Anspruch 14, **dadurch gekennzeichnet, dass** zur Hintergrundbeleuchtung des Werbemediums (15) ein insbesondere als Streuscheibe ausgebildetes durchscheinendes Element (19) zwischen Beleuchtungsmittel und Werbemedium (15) vorgesehen ist.

16. Dachwerbeträger nach einem der Ansprüche 1 bis 15, **dadurch gekennzeichnet, dass** der Werbeträger (6) derart relativ zu dem Grundgestell (2) verstellbar ist, dass er in seiner Verriegelungsposition formschlüssig mit dem Längsträger und/oder dem Querträger verbunden ist.

## Claims

1. Publicity carrier for vehicle roof (1) with a basic frame (2) for fixing on a roof of a vehicle, in particular of a taxi, and with a publicity carrier (6) which has at least one publicity surface (5) for a publicity medium (15), the publicity carrier (6) being movable from an upright display position, in which the publicity carrier for vehicle roof (1) is at a first height, into a rest position, in which the publicity carrier for vehicle roof (1) is at a second height which is lower than the first height, and the publicity carrier for vehicle roof (1) having at least one display element (10) which is designed in particular as a taxi sign, **characterized in that** the at least one display element (2) is movable relative to the basic frame (2) from a locking position, in which the publicity carrier (6) is fixed in its display position or the rest position, into a release position, in which the publicity carrier (6) is movable between the display position and the rest position.

2. Publicity carrier for vehicle roof according to Claim 1, **characterized in that** the publicity surface (5) is oriented essentially upright, in particular essentially vertically, in the display position, and is oriented essentially parallel to the vehicle roof in the rest position.

3. Publicity carrier for vehicle roof according to Claim 1 or 2, **characterized in that** the in particular longish carrier surface (5) is arranged essentially parallel to the longitudinal axis of the vehicle in the display position and in the rest position.

4. Publicity carrier for vehicle roof according to one of Claims 1 to 3, **characterized in that** the publicity carrier (6) can be fixed in the display position and/or in the rest position by locking means.

5. Publicity carrier for vehicle roof according to Claim 4, **characterized in that** the publicity carrier (6) can be held by the locking means in a service position which is situated between the rest position and the display position and in which the publicity surface (5) is at an angle of less than 90 degrees and greater than 0 degrees, in particular between 20 to 60 degrees, with respect to the vehicle roof.

6. Publicity carrier for vehicle roof according to Claim 5, **characterized in that** the publicity carrier (6) is fixed in the service position by the at least one display element in the locking position thereof.

7. Publicity carrier for vehicle roof according to one of Claims 1 to 6, **characterized in that** a receptacle (14) for the publicity medium (15), in particular a publicity placard, is provided on the publicity carrier (5), by means of which receptacle the publicity medium (15) can be fixed in an exchangeable manner.

8. Publicity carrier for vehicle roof according to Claim 7, **characterized in that** the receptacle (14) for the publicity medium (15) is covered by a transparent hood (16) which is arranged removably over the publicity surface (5).

9. Publicity carrier for vehicle roof according to one of Claims 1 to 8, **characterised in that** two display elements (10) are arranged adjacent to the publicity carrier (6).

10. Publicity carrier for vehicle roof according to one of Claims 1 to 9, **characterized in that** on the at least one display element (10) projections (12) and/or recesses (13) are provided which are in engagement, in the locking position, with corresponding recesses (13) and/or projections (12) of the publicity carrier (6) or of a locking element connected thereto.

11. Publicity carrier for vehicle roof according to one of Claims 1 to 10, **characterized in that** in particular wedge- or cone-shaped clamping means are provided, by means of which the publicity carrier (6) can be fixed in its display position and/or the rest position and/or the service position.

12. Publicity carrier for vehicle roof according to one of Claims 1 to 11, **characterized in that** the basic frame (2) has at least one cross member (3) running transversely with respect to the longitudinal axis of the vehicle, and at least one longitudinal member (4) running essentially parallel to the longitudinal axis of the vehicle.

13. Publicity carrier for vehicle roof according to one of Claims 1 to 12, **characterized in that** positioning means (17) formed on the publicity carrier (6), in particular as projections, are provided for the publicity means (15).

14. Publicity carrier for vehicle roof according to one of Claims 1 to 13, **characterized in that** the publicity carrier (6) has illuminating means for background illumination of the publicity medium (15).

15. Publicity carrier for vehicle roof according to Claim 14, **characterized in that** for background illumination of the publicity medium (15) a transparent element (19), designed in particular as a diffusing lens, is provided between illuminating means and publicity medium (15).

16. Publicity carrier for vehicle roof according to one of Claims 1 to 15, **characterized in that** the publicity carrier (6) can be adjusted relative to the basic frame (2) in such a manner that it is connected in its locking position in a form-fitting manner to the longitudinal member and/or the cross member.

## Revendications

1. Support publicitaire pour toit (1) comprenant un bâti de base (2) pour la fixation sur un toit d'un véhicule, notamment d'un taxi, et comprenant un support publicitaire (6) présentant au moins une surface publicitaire (5) pour une publicité (15), le support publicitaire (6) pouvant être déplacé d'une position d'affichage déployée, dans laquelle le support publicitaire pour toit (1) présente une première hauteur, dans une position de repos, dans laquelle le support publicitaire pour toit (1) présente une deuxième hauteur, qui est inférieure à la première hauteur, et dans lequel le support publicitaire pour toit (1) présente au moins un élément d'affichage (10) qui est réalisé notamment sous forme d'enseigne de taxi, **caractérisé en ce que** l'au moins un élément d'affichage (10) peut être déplacé, par rapport au bâti de base (2), d'une position de verrouillage dans laquelle le support publicitaire (6) est fixé dans sa position d'affichage ou dans sa position de repos, dans une position de libération dans laquelle le support publicitaire (6) peut être déplacé entre la position d'affichage et la position de repos.

2. Support publicitaire pour toit selon la revendication 1, **caractérisé en ce que** la surface publicitaire (5) dans la position d'affichage est essentiellement droite, notamment essentiellement verticale, et dans la position de repos est orientée essentiellement parallèlement au toit du véhicule.

3. Support publicitaire pour toit selon la revendication 1 ou 2, **caractérisé en ce que** la surface publicitaire (5) notamment oblongue est disposée dans la position d'affichage et la position de repos essentiellement parallèlement à l'axe longitudinal du véhicule.

4. Support publicitaire pour toit selon l'une quelconque des revendications 1 à 3, **caractérisé en ce que** le support publicitaire (6) peut être fixé dans la position d'affichage et/ou dans la position de repos par des moyens de verrouillage.

5. Support publicitaire pour toit selon la revendication 4, **caractérisé en ce que** le support publicitaire (6) peut être maintenu par les moyens de verrouillage dans une position de service se trouvant entre la position de repos et la position d'affichage, dans laquelle la surface publicitaire (5) peut être maintenue suivant un angle inférieur à 90 degrés et supérieur à 0 degré, notamment compris entre 20 et 60 degrés par rapport au toit du véhicule.

6. Support publicitaire pour toit selon la revendication 5, **caractérisé en ce que** le support publicitaire (6), dans la position de service, est fixé par l'au moins un élément d'affichage dans sa position de verrouillage.

7. Support publicitaire pour toit selon l'une quelconque des revendications 1 à 6, **caractérisé en ce que** l'on prévoit sur le support publicitaire (5) un logement (14) pour la publicité (15), notamment un panneau publicitaire, au moyen duquel la publicité (15) peut être fixée de manière remplaçable.

8. Support publicitaire pour toit selon la revendication 7, **caractérisé en ce que** le logement (14) pour la publicité (15) est recouvert par une housse transparente (16) qui est disposée pardessus la surface publicitaire (5) de manière amovible.

9. Support publicitaire pour toit selon l'une quelconque des revendications 1 à 8, **caractérisé en ce que** deux éléments d'affichage (10) sont disposés à côté du support publicitaire (6).

10. Support publicitaire pour toit selon l'une quelconque des revendications 1 à 9, **caractérisé en ce que** sur l'au moins un élément d'affichage (10) sont prévues des saillies (12) et/ou des évidements (13) qui sont en prise dans la position de verrouillage avec des évidements (13) et/ou des saillies (12) correspondants du support publicitaire (6) ou d'un élément de verrouillage associé.

11. Support publicitaire pour toit selon l'une quelconque des revendications 1 à 10, **caractérisé en ce que** l'on prévoit notamment des moyens de serrage en forme de coins ou de cônes, qui permettent de fixer le support publicitaire (6) dans sa position d'affichage et/ou dans la position de repos et/ou dans la position de service.

12. Support publicitaire pour toit selon l'une quelconque des revendications 1 à 11, **caractérisé en ce que** le bâti de base (2) présente au moins une traverse (3) s'étendant transversalement à l'axe longitudinal du véhicule et au moins un support longitudinal (4) s'étendant essentiellement parallèlement à l'axe longitudinal du véhicule.

13. Support publicitaire pour toit selon l'une quelconque des revendications 1 à 12, **caractérisé en ce que** l'on prévoit sur le support publicitaire (6) des moyens de positionnement (17) pour la publicité (15) réalisés notamment sous forme de saillies.

14. Support publicitaire pour toit selon l'une quelconque des revendications 1 à 13, **caractérisé en ce que** le support publicitaire (6) présente des moyens d'éclairage pour un éclairage de fond de la publicité (15).

15. Support publicitaire pour toit selon la revendication 14, **caractérisé en ce que** pour l'éclairage de fond de la publicité (15), on prévoit un élément translucide (19) réalisé notamment sous forme de plaque diffusante entre les moyens d'éclairage et la publicité (15).

16. Support publicitaire pour toit selon l'une quelconque des revendications 1 à 15, **caractérisé en ce que** le support publicitaire (6) peut être déplacé par rapport au bâti de base (2) de telle sorte qu'il soit connecté dans sa position de verrouillage par engagement par coopération de forme avec le support longitudinal et/ou la traverse.
